Europäisches Patentamt

European Patent Office

Office européen des brevets

(19)

(11) **EP 0 703 828 B1**

(12) **EUROPÄISCHE PATENTSCHRIFT**

(45) Veröffentlichungstag und Bekanntmachung des Hinweises auf die Patenterteilung:
**03.11.1999 Patentblatt 1999/44**

(21) Anmeldenummer: 95915165.5

(22) Anmeldetag: 28.03.1995

(51) Int. Cl.$^6$: **B03D 1/24**, C02F 1/24

(86) Internationale Anmeldenummer:
**PCT/EP95/01156**

(87) Internationale Veröffentlichungsnummer:
**WO 95/27566 (19.10.1995 Gazette 1995/45)**

(54) **VERFAHREN UND VORRICHTUNG ZUM ABTRENNEN VON SUSPENDIERTEN STOFFEN AUS FLÜSSIGKEITEN**

PROCESS AND DEVICE FOR SEPARATING SUSPENDED SUBSTANCES FROM FLUIDS

PROCEDE ET DISPOSITIF DE SEPARATION DE SUBSTANCES EN SUSPENSION DANS DES FLUIDES

(84) Benannte Vertragsstaaten:
**AT BE CH DE DK ES FR GB GR IT LI NL**

(30) Priorität: **11.04.1994 DE 4411991**

(43) Veröffentlichungstag der Anmeldung:
**03.04.1996 Patentblatt 1996/14**

(60) Teilanmeldung:
**99115947.6**

(73) Patentinhaber:
**Aventis Research & Technologies GmbH & Co. KG**
**65926 Frankfurt am Main (DE)**

(72) Erfinder:
• **BENNOIT, Horst**
  **D-66333 Völklingen (DE)**
• **MÜLLER, Gerhard**
  **D-61462 Königstein (DE)**
• **ZORN, Friedhelm**
  **D-56370 Ebertshausen (DE)**

(56) Entgegenhaltungen:
**DE-A- 3 826 955**          **DE-A- 3 839 371**
**FR-A- 2 457 120**          **US-A- 1 333 712**

**Beschreibung**

Gegenstand der Erfindung ist ein Verfahren zum Abtrennen von suspendierten Stoffen aus Flüssigkeiten, die in einer biologischen Abwasserreinigungsanlage bei einer Flüssigkeitshöhe von 5 bis 30 m vorliegen und durch eine erste Luftzufuhr begast sind, durch Flotation. Gegenstand der Erfindung ist ferner eine Vorrichtung zum Durchführen des vorstehenden Verfahrens.

Es ist bekannt, den Feststoff eines aus einer Belebungsstufe abfließenden Abwassers, das in der Belebungsstufe mit Luft begast wird (DE 3826955 A1) durch Sedimentation abzutrennen. In vielen Fällen ist der Betrieb einer Sedimentation jedoch sehr störanfällig, insbesondere dann, wenn der Absetzvorgang durch zu geringe Dichteunterschiede zwischen Belebtschlamm und Wasser zu langsam verläuft. Störend auf den Sedimentationsprozess wirken in vielen Belebungsanlagen kleine Gasbläschen, die mit dem Schlammwassergemisch aus der Belebungsstufe in die Nachklärung geschleppt werden, beziehungsweise durch Entgasung infolge von Gasübersättigung oder durch biochemische Reaktionen im Nachklärbecken entstehen. Als Alternative zur Sedimentation ist die Flotation des Feststoffes aus Schlammwassergemischen bekannt (DE 38 39 371 A1). Man unterscheidet zwei Flotationsverfahren, nämlich die Begasungsflotation und die Druckentspannungsflotation.

Bei der Begasungsflotation wird das Schlammwassergemisch in der Kontakt- und Mischzone der Flotationsanlage mit Gasblasen begast, die in der Regel Blasendurchmesser von 200-1000 µm aufweisen. Die Gasblasen lagern sich an die Schlammflocken an und ziehen die Schlammflocke an die Oberfläche. Mit

Hilfe einer Räumvorrichtung wird der Schlamm entfernt. Die Begasungsflotation bereitet beim Belebtschlammverfahren Probleme, da die mit der Begasung erreichbaren Blasengrößen gegenüber den Schlammflocken in der Regel zu groß sind. Ein Anheften dieser relativ großen Blasen an die Schlemmflotte erfolgt nur partiell. Abhelfen kann man durch Zugabe von organischen Flockungsmitteln, was zusätzlich die Prozeßkosten erheblich verteuert.

Ein wesentlich besseres Blasenspektrum -kleinere Blasen- läßt sich mit der Druckentspannungsflotation erreichen. Die Gasblasen werden bei diesem Verfahren durch Entspannung einer bei hohem Druck (4 bis 6 bar) mit Luft gesättigten Flüssigkeit erzeugt und damit gleichmäßig im Schlammwassergemisch verteilt. Bei der Druckentspannungsflotation, im allgemeinen Entspannungsflottation genannt, unterscheidet man ebenfalls zwei Verfahrensvariaten, nämlich die Entspannungsflottation mit Vollstrombelüftung und die Entspannungsflottation mit Teilstrombelüftung.

Bei der Entspannungsflottation mit Vollstrombelüftung wird das vom Belebungsbecken entnommene Schlammwassergemisch bei Drücken von 0,5 bis 6 bar mit Luft gesättigt und anschließend vor der Flotationszelle entspannt. Der Nachteil dieses Verfahrens besteht neben den hohen Betriebskosten für die Sättigung mit Luft zum einen in der Verstopfungsanfälligkeit der Anlage durch den Belebtschlamm zum anderen in der Zerschlagung von Belebtschlammflocken.

Bei der Entspannungsflottation mit Teilstrombelüftung wird Frischwasser oder ein Teil des ablaufenden, gereinigten Klarwassers mit Luft bei einem Druck von 4 bis 6 bar gesättigt, mit dem Schlammwassergemisch vermischt und in einer Kontakt- und Mischzone der Flotationsanlage entspannt. Auch bei dieser Variante sind die Kosten für die Erzeugung des Druckwassers sehr hoch. Für 1 m$^3$ Schlammwassergemisch wird bei solchen Anlagen bis zu 1 m$^3$ Druckwasser benötigt.

Der vorliegenden Erfindung liegt demnach die Aufgabe zugrunde, ein Verfahren zu schaffen, das die Vorteile der Druckentspannungsflotation nutzt, den Energiebedarf für die Flotation jedoch in erheblichem Maße reduziert.

Die Aufgabe wird durch das Eingangs beschriebene Verfahren gelöst, bei dem man die für die Flotation zu entnehmende Suspension mit einer Strömungsgeschwindigkeit ≤ 0,3 m/s in einer Begasungsvorrichtung mit einer zweiten Luftzufuhr gegen die natürliche Aufstiegsrichtung der Blasen aus der zweiten Luftzufuhr führt, dabei die Suspension zusätzlich begast, die begaste Suspension am Boden der Begasungsvorrichtung entnimmt und einer Abtrennung durch Flotation unterwirft.

Die Suspension kann durch Einleiten von Luft, Druckwasser oder einem Gemisch aus Mikroblasen und Wasser begast werden. Die begaste Suspension kann vor einleiten in die Flotation einer weiteren Begasung unterzogen werden.

Bei der Vorrichtung zum Durchführen des Verfahrens ist in einer biologischen Abwasserreinigungsanlage ein Begasungsreaktor mit einer ersten Luftzufuhr und einer Flüssigkeitshöhe von 5 bis 30 m ein Abstromreaktor mit einer zweiten Luftzufuhr und mit einem Schlankheitsgrad von Höhe zu Durchmesser (H/D) > 1 , vorzugsweise 3 < H/D ≤ 30 angeordnet . Der Abstromreaktor kann selbstverständlich mit gleichem Erfolg zwischen Begasungsreaktor und Flotationseinrichtung sowie in der Flotationseinrichtung selbst angeordnet sein.

Die Vorteile des erfindungsgemäßen Verfahrens sind im wesentlichen darin zu sehen, daß der Gasgehalt im Schlammwassergemisch, also in der Suspension bei minimalem Energieaufwand erheblich gesteigert werden kann. Darüber hinaus ermöglicht das Verfahren, die in der Suspension vorliegende Kohlendioxidkonzentration durch variieren der zusätzlichen Gasmenge zu beeinflußen.

Im Folgenden wird die Erfindung anhand von Beispielen näher erläutert. Bei allen Beispielen soll im Ergebnis der Feststoffgehalt im Klarwasser ≤ 30mg/l und die Schlammaufstiegsgeschwindigkeit ≥ 15 m/h sein.

Beispiel 1

Bei einem diskontinuierlichen Flotationsversuch werden einer Abwasserreinigungsanlage mit einem Belebungsraum von 3,8 m Hohe 8 l Schlammwassergemisch mit einem pH-Wert von 6,8, einer Temperatur von 20°C und einer Biomassekonzentration von 4 g/l entnommen und nach dem bekannten Verfahren mit Druckwasser (5 bar Überdruck) gemischt. Bei einer Zumischung von 3,5 l Druckwasser (44,0 Gew.-%) wurde die geforderte Schlammaufstiegsgeschwindigkeit von ≥ 15 m/h und einer Feststoffkonzentration im Klarwasser von ≤ 30 mg/l erreicht.

Beispiel 2

Bei einem diskontinuierlichen Flotationsversuch werden einer Abwasserreinigungsanlage mit einem Belebungsraum von 10 m Höhe am Boden 8 l Schlammwassergemisch mit einem pH-Wert von 6,8, einer Temperatur von 20°C und einer Biomassekonzentration von 4 g/l entnommen. Für die Flotation des Feststoffes werden nach dem bekannten Verfahren 2,7 l Druckwasser von 5 bar (35 Gew.-%) benötigt, um bei einer Schlammaufstiegsgeschwindigkeit von ≥ 15 m/h die geforderte Feststoffkonzentration von ≤ 30 mg/l im Klarlauf zu erhalten.

Wird das Belebtschlammwassergemisch nach dem erfindungsgemäßen Verfahren entgegen der Blasenaufstiegsrichtung über eine Vorrichtung (Abstromsäule) mit einem Schlankheitsgrad von H/D gleich 5 geleitet und dabei mit 0,6 l Luft begast, werden für die diskontinuierliche Flotation des Feststoffes nur noch 1,7 l Druckwasser von 5 bar (22 Gew.-%) benötigt. Das bedeutet, daß für das gleiche Ergebnis nur noch 60 % Druckwasser erforderlich sind.

Beispiel 3

Bei einer kontinuierlich betriebenen biologischen Abwasserreinigungsanlage bestehend aus einem 10 m hohem Belebungstank und einer Flotationszelle mit 10 m$^2$ Oberfläche, werden dem Belebungstank 40 m$^3$/h Schlammwassergemisch mit einem Feststoffgehalt von 4 kg Trockenmasse pro m$^3$ entnommen und der Flotationszelle zugeführt.

Zur ausreichenden Trennung von Biomasse (≤ 30mg/l Klarwasser) und Wasser werden nach dem bekannten Verfahren dem Schlammwassergemisch 14 m$^3$ Druckwasser von 5 bar pro Stunde zugeführt. Die Feststoffkonzentration im Klarwasser beträgt 24 mg/l und liegt somit unter der Zielvorgabe.

Wird das dem Belebungstank entnommene Schlammwassergemisch nach dem erfindungsgemäßen Verfahren entgegen der Blasenaufstiegsrichtung über eine Vorrichtung mit einer Höhe von 9 m und einem Durchmesser von 0,4 m, also einem Schlankheitsgrad H/D gleich 22,5 geführt und mit 1 m$^3$_N Luft pro

Stunde begast, werden für einen Feststoffgehalt 16 mg/l im Klarwasser nur noch 8 m$^3$/h Druckwasser benötigt.

Beispiel 4

Aus einem 20 m hohen Begasungsreaktor mit integrierter Abströmkolonne werden kontinuierlich im Seitenstrom 10 m$^3$/h Schlammwassergemisch entnommen und einer Flotationszelle mit 2 m$^2$ Klärfläche zugeführt. Die Biomassekonzentration beträgt 3 g/l. Zur Abscheidung des Belebtschlammes innerhalb der Zielvorgabe von < 30 mg/l Feststoffkonzentration im Klarwasser werden in die Flotationszelle 1,5 m$^3$/h Druckwasser von 5 bar eingespeist. Es werden Konzentrationen < 20 mg/l erreicht.

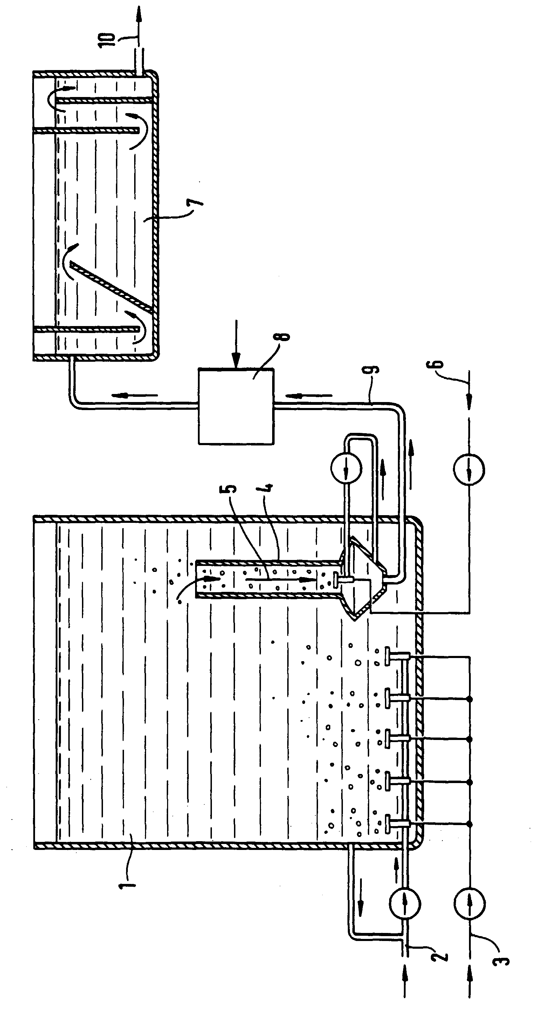

Die Figur zeigt die erfindungsgemäße Vorrichtung in beispielsweiser Ausführung schematisch dargestellt. In einem Begasungsreaktor (Belebungstank) 1 mit Abwasser- 2 und Gaseinleitung 3 ist ein Abstromreaktor 4 angeordnet. Der Pfeil 5 deutet die Richtung des Schlammwassergemisches und 6 die Luftzufuhr für die zusätzliche Begasung des Schlammwassergemisches an. Dem Begasungsreaktor 1 ist eine Flotationszelle 7 (Druckentspannungseinrichtung nicht gezeigt) angeordnet. Im vorliegenden Beispiel ist die Vorrichtung 8 zum Herstellen und Zumischen von Druckwasser zum Schlammwassergemisch in der Verbindungsleitung 9 zwischen Belebungstank 1 und Flotationszelle 7 angeordnet. 10 deutet den Klarlauf an.

Entsprechend dem erfindungsgemäßen Verfahren wird das Schlammwassergemisch über den Abstromreaktor 4 der Flotationszelle 7 zugeführt und dabei durch die Luftzufuhr 6 gleichzeitig begast. Die Strömung des Schlammwassergemisches in den Abstromreaktor 4 ist gegen die natürliche Blasenaufstiegsrichtung gerichtet, wobei die Strömungsgeschwindigkeit im Bereich von 0,01 bis 0,3 m/s, vorzugsweise von 0,05 bis 0,2 m/s liegt.

**Patentansprüche**

1. Verfahren zum Abtrennen von suspendierten Stoffen aus Flüssigkeiten, die in einer biologischen Abwasserreinigungsanlage bei einer Flüssigkeitshöhe von 5 bis 30 m vorliegen und durch eine erste Luftzufuhr begast sind, durch Flotation, dadurch gekennzeichnet, daß man die für die Flotation zu entnehmende Suspension mit einer Strömungsgeschwindigkeit ≤ 0,3 m/s in einer Begasungsvorrichtung mit einer zweiten Luftzufuhr gegen die natürliche Aufstiegsrichtung der Blasen aus der zweiten Luftzufuhr führt, dabei die Suspension zusätzlich begast, die begaste Suspension am Boden der Begasungsvorrichtung entnimmt und einer Abtrennung durch Flotation unterwirft.

2. Verfahren nach Anspruch 1, dadurch gekennzeichnet, daß die Suspension in der zweiten Begasung durch Einleiten von Luft, von Druckwasser oder einem Gemisch aus Mikroblasen und Wasser begast wird.

3. Verfahren nach Anspruch 1 oder 2, dadurch gekennzeichnet, daß man die zweimal begaste Suspension vor Einleiten in die Flotation einer dritten Begasung unterzieht.

4. Vorrichtung zum Durchführen des Verfahrens nach Anspruch 1, aufweisend eine biologische Abwasserreinigungsanlage, die einen Begasungsreaktor und eine erste Luftzufuhr aufweist und die mit Flüssigkeit bis zu einer Höhe von 5 bis 30 m befüllbar ist, und eine Flotationseinrichtung, dadurch gekennzeichnet, daß in dem Begasungsreaktor oder zwischen dem Begasungsreaktor und der Flotationseinrichtung oder in der Flotationseinrichtung ein Abstromreaktor mit einer zweiten Luftzufuhr und mit einem Schlankheitsgrad von Höhe zu Durchmesser (H/D) > 1, vorzugsweise 3 < H/D ≤ 30 angeordnet ist.

## Claims

1. Process for separating off by flotation suspended substances from liquids which are present in a biological wastewater-purification plant at a liquid depth from 5 to 30 m and are gas-treated via a first air feed, characterized in that the suspension to be taken off for the flotation is conducted at a flow velocity ≤ 0.3 m/s in a gas-treatment apparatus having a second air feed against the natural direction of ascension of the bubbles from the second air feed, in the course of this the suspension is additionally gas-treated, the gas-treated suspension is taken off at the bottom of the gas-treatment apparatus and subjected to separation by flotation.

2. Process according to Claim 1, characterized in that the suspension is gas-treated in the second gas-treatment by introducing air, pressurized water or a mixture of microbubbles and water.

3. Process according to Claim 1 or 2, characterized in that in that the suspension which is gas-treated twice is subjected to a third gas treatment prior to introduction into the flotation.

4. Apparatus for carrying out the process according to Claim 1, having a biological wastewater-purification plant which has a gas-treatment reactor and a first air feed and which can be charged with liquid up to a depth of 5 to 30 m, and a flotation device, characterized in that in the gas-treatment reactor or between the gas-treatment reactor and the flotation device or in the flotation device there is disposed an downflow reactor which has a second air feed and a slenderness ratio of height to diameter (H/D) > 1, preferably 3 < H/D ≤ 30.

## Revendications

1. Procédé de séparation par flottation de substances en suspension dans des fluides, qui sont présentes dans une installation biologique de purification d'effluents aqueux avec une hauteur de fluide de 5 à 30 m et qui sont soumis à des gaz au moyen d'une première alimentation d'air, caractérisé en ce que, l'on charge la suspension à prélever pour la flottation avec une vitesse d'écoulement ≤ 0,3 m/s dans un dispositif d'absorption de gaz avec une deuxième alimentation en air en sens contraire de la direction naturelle de montée des bulles provenant de la deuxième alimentation en air, on y soumet de plus la suspension à des gaz, on prélève la suspension chargée en gaz en bas du dispositif d'absorption du gaz et on effectue une séparation par flottation.

2. Procédé selon la revendication 1, caractérisé en ce que la suspension est chargé en gaz dans la deuxième absorption de gaz par introduction d'air, d'eau sous pression ou d'un mélange de microbulles et d'eau.

3. Procédé selon la revendication 1 ou 2, caractérisé en ce que l'on soumet la suspension chargée deux fois en gaz à une troisième absorption de gaz avant de l'introduire dans la flottation.

4. Dispositif de réalisation du procédé selon la revendication 1, présentant une installation biologique de purification d'effluents aqueux, qui présente un réacteur d'absorption de gaz et une première alimentation en air et qu'on peut remplir avec du fluide jusqu'à une hauteur de 5 à 30 m, et un dispositif de flottation, caractérisé en ce que l'on aménage dans le réacteur d'absorption de gaz ou entre le réacteur d'absorption de gaz et l'installation de flottation ou dans l'installation de flottation un réacteur à entraînement par le courant avec une deuxième alimentation d'air et avec un rapport d'allongement de hauteur sur diamètre (H/D) > 1, de préférence 3 < H/D ≤ 30.